# EUROPÄISCHE PATENTSCHRIFT

(11) **EP 4 093 242 B1**
(45) Veröffentlichungstag und Bekanntmachung des Hinweises auf die Patenterteilung: **02.04.2025**
(21) Anmeldenummer: 21701974.4
(22) Anmeldetag: 25.01.2021
(51) Int. Cl.: A47B 57/54, A47B 96/02, A47B 96/06, F16B 12/10

(54) **STRUKTURSYSTEM UND REGAL**
STRUCTURAL SYSTEM AND SHELF
SYSTÈME DE STRUCTURE ET RAYONNAGE

(30) Priorität: 23.01.2020 CH 732020
(43) Veröffentlichungstag der Anmeldung: 30.11.2022
(73) Patentinhaber: Visplay GmbH, 79576 Weil am Rhein (DE)
(72) Erfinder: JERABEK, Harald, 79395 Neuenburg (DE); SANDER, Marco, 76576 Weil am Rhein (DE)
(74) Vertreter: Latscha Schöllhorn Partner AG
(86) Internationale Anmeldenummer: PCT/EP2021/051583
(87) Internationale Veröffentlichungsnummer: WO 2021/148669

(56) Entgegenhaltungen:
- WO-A1-01/37706
- WO-A1-97/00033
- KR-A- 20070 107 919

## Beschreibung

### Technisches Gebiet

Die Erfindung betrifft ein Struktursystem zum modularen Aufbau von Regalen sowie ein aus einem solchen Struktursystem aufgebautes Regal.

### Stand der Technik

Zum flexiblen Zusammenstellen von Möbeln sind Systeme bekannt, bei denen sich aus Grundkomponenten variabel Möbel aufbauen lassen. Gerade in Warengeschäften oder in Büros, wo typischerweise die Möblierung beziehungsweise die Anforderungen an die Möblierung von Zeit zu Zeit ändert, sind variable Möbelbausysteme verbreitet.

Oft basieren bekannte variable Möbelbausysteme auf einer dreidimensionalen tragenden Rohrstruktur, die in unterschiedlicher Weise aufgebaut werden kann. Beispielsweise ist in der EP 0 262 090 A1 eine Möbelstruktur beschrieben, die eine Mehrzahl von über Knotenelemente verbindbaren Rohren aufweist. Mittels der Knotenelemente können in diesem System die Rohre in unterschiedlicher Weise zusammengesetzt werden und damit insbesondere Gestelle in unterschiedlichen Formen erstellt werden. Auch können die verbundenen Rohre mit Sichtblenden und Böden ausgestattet werden, die zwischen den Rohren montiert werden.

Die Druckschrift KR 2007 0107919 A offenbart ein Struktursystem zum modularen Aufbau von Regalen.

Unter anderem in modernen Verkaufsgeschäften oder auf Messen besteht heutzutage zunehmend ein Bedürfnis danach, die Möblierung oft und umfassend anzupassen. Bekannte Möbelbausysteme sind dabei trotz ihrer Variabilität nachteilig, da sie aufwendig zerlegt und wieder neu aufgebaut werden müssen. Typischerweise wird dieser Umbau von geschulten Personen unter Einsatz von Spezialwerkzeug vorgenommen. Dies ist unter anderem aus Sicherheitsgründen erforderlich, da das Möbelbausystem gewährleisten muss, dass mit ihm erstellte Möbel ausreichend stabil sind. Eine unstabile Möblierung kann eine erhebliche Gefährdung von Personen nach sich ziehen, insbesondere bei vergleichsweise hohen und/oder stark beladenen Möbeln.

Da mit den bekannten Möbelbausystemen ein Auf-, Um- und Abbau von Möbeln wie erwähnt aufwendig ist und bei unsachgemässer Ausführung ein Sicherheitsrisiko stellen kann, wird heutzutage häufig davon abgesehen, die Möblierung bei sich ändernden Bedürfnissen anzupassen.

Aufgabe der nachfolgenden Erfindung ist es daher, ein System vorzuschlagen, mit dem auf einfache Weise möglich ist, werkzeuglos oder ausschliesslich mit herkömmlichen einfachen Werkzeugen, flexibel Möbel zu erstellen beziehungsweise umzubauen, die ausreichend robust sind und Sicherheit bieten, dass sie beispielsweise für Büros oder Verkaufsgeschäfte geeignet sind. Insbesondere soll das System ermöglichen, Regale beziehungsweise Gestelle flexibel, effizient und sicher auf-, um- und abzubauen.

### Darstellung der Erfindung

Die Aufgabe wird erfindungsgemäss durch ein Struktursystem gelöst, wie es im unabhängigen Anspruch 1 definiert ist, sowie durch ein Regal, wie es im unabhängigen Anspruch 15 definiert ist. Vorteilhafte Ausführungsvarianten der Erfindung ergeben sich aus den abhängigen Ansprüchen.

Das Wesen der Erfindung besteht im Folgenden: Ein Struktursystem zum modularen Aufbau von Regalen umfasst einen Satz längsförmiger Vertikalstützen, einen Satz Rahmen und einen Satz Verbinder. Die Vertikalstützen weisen jeweils zumindest eine sich axial erstreckende Reihe von Lochungen auf. Die Rahmen weisen jeweils vier Streben auf, von denen jeweils zwei über eine Montageecke miteinander verbunden sind. Die Verbinder sind jeweils dazu ausgebildet, in eine Lochung einer der Vertikalstützen eingeführt und an einer der Montageecken eines der Rahmen befestigt zu werden. Das Struktursystem ist so ausgebildet, dass in einem zusammengebauten Zustand zumindest ein Rahmen des Satzes Rahmen an seinen Montageecken über jeweils einen Verbinder des Satzes Verbinder an vier Vertikalstützen befestigt ist, dass jeweils zwei benachbarte und über eine der Streben des zumindest einen Rahmens miteinander verbundene Vertikalstützen eine Stützenebene definieren, und dass die vier Streben des zumindest einen Rahmens so ausserhalb der durch die vier mit ihm verbundenen Vertikalstützen definierten Stützenebenen liegen, dass der zumindest eine Rahmen zwischen zwei Vertikalstützen hindurchragend und mit anderen Vertikalstützen verbindbar ist.

Das Struktursystem kann insbesondere ein System zum modularen Aufbau von Regalen betreffen. Dabei kann es zum flexiblen Auf-, Um-, Aus- und Abbau von Regalen oder ähnlichen Möbeln je nach Bedarf mit Bauteilen unterschiedlicher Grösse und Ausführung vorgesehen sein. Auch können die mit dem Struktursystem aufgebauten Strukturen beziehungsweise Regale oder ähnliche Möbel zum Aufteilen oder Strukturieren eines Raumes verwendet werden. Das Struktursystem kann auch als Regalbausatz bezeichnet werden.

Der Begriff "axial" im Zusammenhang mit der zumindest einen Reihe von Lochungen bezieht sich insbesondere auf ein Erstrecken entlang der Vertikalstütze beziehungsweise entlang einer Längsachse der typischerweise längsförmigen Vertikalstütze. Dabei befinden sich die Lochungen typischerweise in regelmässigen Abständen zueinander auf einer Geraden, die parallel zu oder auf der Längsachse der Vertikalstütze liegt.

Der Begriff "Satz" im Zusammenhang mit dem Struktursystem und dessen Vertikalstützen, Rahmen und Verbinder bezieht sich auf eine Mehrzahl von gleichen oder ähnlichen Elementen beziehungsweise Bauteilen. Vorteilhafterweise umfasst der Satz Vertikalstützen zumindest vier einzelne Vertikalstützen auf, damit ein Regal aufgebaut werden kann. Der Satz Rahmen weist vorteilhafterweise zumindest zwei Rahmen, damit das mit ihnen aufgebaute Regal ausreichend stabil ist. Der Satz Verbinder umfasst vorteilhafterweise zumindest acht Verbinder, damit die zumindest zwei Rahmen abgestützt mit den Vertikalstützen verbunden werden können.

Die Stützenebenen werden jeweils durch die beiden benachbarten Vertikalstützen definiert, indem diese beide in ihr liegen. Dabei kann sich der Begriff "in der Stützenebene liegen" in diesem Zusammenhang darauf beziehen, dass die Längsachsen der benachbarten Vertikalstützen oder eine Kante der benachbarten Vertikalstützen in einer Ebene liegen.

Der Begriff "ausserhalb der Stützenebene liegen" bezieht sich im Zusammenhang mit der Erfindung darauf, dass die Strebe nicht in der durch die Vertikalstützen, welche die Strebe miteinander verbindet, definierte Ebene liegt. Dabei kann ein solches Ausserhalb-der-Stützenebene-Liegen, ein Positionieren in Bezug auf das aus dem Struktursystem gebaute Regal beziehungsweise Möbel nach aussen oder insbesondere nach innen sein.

Indem die Streben ausserhalb der Stützebenen liegen, kann erreicht werden, dass die Streben nicht einzeln mit den Vertikalstützen verbunden werden müssen, sondern ganze Rahmen an mehreren Vertikalstützen gleichzeitig befestigt werden können. Dies ermöglicht ein einfacheres und effizienteres auf- und umbauen eines Regals beziehungsweise Möbels. Zudem ermöglicht dies eine vergleichsweise stabile Konstruktion. Erfindungsgemäß ist die Vielseitigkeit der Zusammenbaumöglichkeiten erhöht, da die Rahmen zwischen zwei Vertikalstützen hindurchragend und mit anderen Vertikalstützen verbunden werden können.

Die Vertikalstützen sind in einem aufgebauten Zustand beziehungsweise in in einem Regal verbauten Zustand quasi vertikal ausgerichtet. Entsprechend verlaufen auch die Stützenebenen in diesem Zustand vertikal.

Die Rahmen können quasi als Rechtecke ausgebildet sein, indem jede der Montageecken jeweils zwei Streben rechtwinklig miteinander verbindet. Dabei können alle Streben eines Rahmens gleich lang sein oder jeweils zwei gegenüberliegende zwei Streben kürzer und zwei andere gegenüberliegenden Streben länger. Rechteckig in dem erwähnten Sinn kann also auch quadratisch sein.

Die Streben können balkenartig beziehungsweise rohrartig ausgebildet sein. Insbesondere können sie als Vierkantrohre beispielsweise aus Metall oder einem festen Kunststoff hergestellt sein.

Die Montageecken können als eigene Bauteile ausgeführt sein, die mit jeweils zwei Streben fix verbunden sind. Beispielsweise können sie zwei rechtwinklig zueinander verlaufende Steckabschnitte aufweisen, auf die jeweils eine der Streben aufgesteckt ist.

Das erfindungsgemässe Struktursystem ermöglicht ein flexibles modulares Gestalten von Möbeln und insbesondere von Regalen oder regalähnlichen Strukturen. Insbesondere können aus den Komponenten beziehungsweise Bauteilen des Struktursystems werkzeuglos oder ausschliesslich mit herkömmlichen einfachen Werkzeugen von ungeschulten Personen effizient, flexibel und reversibel stabile Regalstrukturen auf-, ab- und umgebaut werden.

Vorzugsweise verbinden die Montageecken der Rahmen jeweils zwei Streben quasi rechtwinklig miteinander, sodass die Montageecke einen Aussenwinkel von quasi 270° definiert, und die Montageecken weisen jeweils einen Verbindungsfortsatz auf, der sich quasi in Richtung einer Winkelhalbierenden des Aussenwinkels erstreckt. Mit solchen Verbindungsfortsätzen an den Montageecken können die Streben der Rahmen auf effiziente Weise insbesondere nach innen versetzt sein und so ausserhalb der Stützenebenen liegen. Dabei gewährleisten die Verbindungsfortsätze eines Rahmens, dass die Streben in gleichem Umfang und sicher gehalten versetzt sind und so ausserhalb der Stützenebenen liegen.

Vorzugsweise sind die Montageecken der Rahmen jeweils mit einer Aufnahme ausgestattet, die zum vertikalen Einführen eines der Verbinder ausgebildet sind. Solche Montageecken ermöglichen ein einfaches reversibles Einhängen der Rahmen an den Vertikalstützen. Insbesondere kann der Rahmen über die Schwerkraft auf die Verbinder gedrückt werden und so sicher an den Vertikalstützen befestigt sein. Damit können die Rahmen effizient montiert und demontiert werden.

In einer bevorzugten Ausführungsform ist dabei die Aufnahme am Verbindungsfortsatz angeordnet. So kann die Aufnahme gut zugänglich sein, sodass der Rahmen einfach und effizient am Verbinder befestigt werden kann.

Dabei sind die Rahmen vorzugsweise dazu ausgebildet, an vier der Vertikalstützen befestigt zu sein, indem jeweils an einer der Vertikalstützen montierter Verbinder in die Aufnahme einer der Montageecken eingeführt ist. Auf diese Weise können die vier Vertikalstützen miteinander verbunden sein. Für ein stabiles Regal können insbesondere zumindest zwei Rahmen an den vier Vertikalstützen befestigt werden. So kann auch ein Verkippen des Regals verhindert werden.

Vorzugsweise sind die Montageecken von mindestens zwei der Rahmen des Satzes von Rahmen jeweils mit einem Spannmechanismus ausgestattet, der dazu ausgebildet ist, den zugehörigen Rahmen mit der Vertikalstütze zu verspannen, an der er über einen Verbinder befestigt ist. Über ein solches Verspannen kann eine hohe Stabilität erreicht werden. Insbesondere können zwei mit den vier Vertikalstützen verspannte Rahmen eine ausreichende Festigkeit gewährleisten, sodass weitere Rahmen nur noch aufgelegt und nicht verspannt werden müssen.

Vorzugsweise sind die Rahmen des Satzes Rahmen bis auf die Länge der Streben identisch ausgebildet. Der Begriff "bis auf die Länge der Streben identisch" bezieht sich im Zusammenhang mit den Rahmen nicht darauf, dass die Länge der Streben nicht identisch sein darf. Vielmehr können die Streben zweier Rahmen gleiche oder auch unterschiedliche Längen aufweisen. Somit kann der Satz Rahmen exakt identische Rahmen aufweisen oder solche, die grösser beziehungsweise kleiner dimensioniert sind. Auch in einem einzelnen Rahmen sind typischerweise jeweils zwei parallele Streben in der Länge identisch, sodass eine rechteckige oder quadratische Form erzeigt werden kann.

Vorzugsweise umfasst das Struktursystem einen Satz Böden, die jeweils dazu ausgestaltet sind, auf einen der Rahmen aufgelegt zu werden, wenn dieser an Vertikalstützen montiert ist. Der Begriff "Auflegen" bezieht sich in diesem Zusammenhang auf ein beliebiges loses, fixiertes, verbundenes oder sonstiges Positionieren eines Bodens auf einem der Rahmen. Solche Böden können in vielen Anwendungen zweckmässig sein. Insbesondere können sie zum Aufstellen von Waren oder anderen Gütern dienen. Die Böden können aus unterschiedlichen Materialien wie beispielsweise Glas, Holz, Metall oder Kunststoff hergestellt sein. Dabei kann das Material aus ästhetischen und/oder funktionalen Gesichtspunkten gewählt werden.

Die Böden sind dabei vorzugsweise jeweils im Wesentlichen rechteckig. Der Begriff "rechteckig" im Zusammenhang mit den Böden umfasst auch quadratische Formen. Solche rechteckigen Böden ermöglichen in vielen Anwendungen einen einfachen und zweckmässigen Aufbau.

Dabei umfassen die Böden vorzugsweise jeweils vier Ecken, die jeweils dazu ausgebildet sind, eine der Vertikalstützen teilweise zu umgreifen. Die Ecken der Böden können die zugehörigen Vertikalstützen jeweils zu etwa einem Viertel deren Umfänge umgreifen. Solche Böden ermöglichen des Bereitstellen einer vergleichsweise grossen Auflagefläche.

Vorzugsweise sind die Streben der Rahmen mit einer ersten Ausrichtstruktur und die Böden mit einer zweiten Ausrichtstruktur ausgestattet und die ersten Ausrichtstrukturen der Rahmen und die zweiten Ausrichtstrukturen der Böden sind dazu ausgestaltet, dass die Böden in einer vordefinierten Position auf die Rahmen auflegbar sind. Insbesondere können die Ausrichtstrukturen gewährleisten, dass die Böden ausschliesslich in der vordefinierten Position auf die Rahmen aufgelegt werden können.

Dabei weist die erste Ausrichtstruktur vorzugsweise eine Aufnahme auf und die zweite Ausrichtstruktur einen zur Aufnahme passenden Vorsprung. Die Aufnahme kann als Eindellung, Öffnung oder Bohrung in der zugehörigen Strebe vorgesehen sein. Der Vorsprung kann als entsprechende Wölbung, als Zapfen, als Bolzen oder als etwas ähnliches ausgebildet sein. Eine solche Konfiguration der ersten und zweiten Ausrichtstrukturen ermöglicht ein effizientes Anordnen der Böden auf den Rahmen an den vordefinierten Positionen. Zudem kann mittels einer solchen Ausgestaltung verhindert werden, dass die Böden seitlich beziehungsweise horizontal auf den Rahmen verschoben beziehungsweise bewegt werden. Dies kann die Sicherheit eines aus dem Struktursystem aufgebauten Regals erhöhen beziehungsweise gewährleisten.

Bevorzugt weisen die Verbinder jeweils einen Hakenabschnitt auf, der dazu ausgebildet ist, in eine der Lochungen einer der Vertikalstützen eingehängt zu werden. Ein solcher Hakenabschnitt ermöglicht ein effizientes und sicheres Befestigen des Verbinders an einer der Vertikalstützen. Über den eingehängten Verbinder kann dann der Rahmen effizient an der Vertikalstütze befestigt werden.

Vorzugsweise umfasst der Satz Vertikalstützen zumindest eine Vertikalstütze, die eine Mehrzahl von sich axial erstreckender Reihen von Lochungen aufweist. Insbesondere können mehreren Reihen von Lochungen an unterschiedlichen Seiten der Vertikalstütze ausgebildet sein. So können Rahmen an verschiedenen Seiten an der Vertikalstütze befestigt werden, was den Aufbau von vergleichsweise grossen beziehungsweise komplexen Regalen oder ähnlichen Möbeln ermöglicht.

Vorzugsweise umfasst der Satz Vertikalstützen zumindest eine Vertikalstütze mit einer einzigen sich entlang der Vertikalstütze erstreckenden Reihe von Lochungen. Solche Vertikalstützen können insbesondere aus ästhetischen Gründen an Enden von aus dem Struktursystem aufgebauten Regalen beziehungsweise Möbeln oder ähnliche Strukturen gewünscht sein.

Alternativ oder zusätzlich dazu umfasst der Satz Vertikalstützen vorzugsweise zumindest eine Vertikalstütze mit genau zwei sich entlang der Vertikalstütze erstreckender Reihen von Lochungen.

Alternativ oder zusätzlich dazu umfasst der Satz Vertikalstützen vorzugsweise zumindest eine Vertikalstütze mit genau drei sich entlang der Vertikalstütze erstreckender Reihen von Lochungen.

Alternativ oder zusätzlich dazu umfasst der Satz Vertikalstützen vorzugsweise zumindest eine Vertikalstütze mit vier sich entlang der Vertikalstütze erstreckender Reihen von Lochungen umfasst.

Mit Vorteil umfasst der Satz verschiedene Vertikalstützen mit unterschieldichen Anzahlen von Reihen von Lochungen. Auf diese Weise kann das Struktursystem einen äusserst flexiblen Aufbau von Regalen und ähnlichen Möbeln in unterschiedlicher Ausgestaltung ermöglichen.

Bevorzugt weisen die Vertikalstützen im Querschnitt jeweils einen kreisförmigen Aussenumfang auf. Der Querschnitt kann dabei insbesondere quasi rechtwinklig zu einer Längsachse der zugehörigen Vertikalstütze liegen.

Dabei umfassen die Vertikalstützen vorzugsweise jeweils einen rundrohrförmigen Rohrkörper. Solche rundrohrförmigen Vertikalstützen können eine vergleichsweise hohe Stabilität aufweisen und vergleichsweise schlank erscheinen, was aus ästhetischen Gründen gewünscht sein kann.

In einem anderen Aspekt ist die Erfindung ein Regal, das aus einem Struktursystem, wie es oben beschrieben ist, aufgebaut ist. Ein solches Regal ermöglicht ein effizientes Implementieren der oben im Zusammenhang mit dem erfindungsgemässen Struktursystem und seinen bevorzugten Ausführungsformen beschriebenen Effekte und Vorteile.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden das erfindungsgemässe Struktursystem und das erfindungsgemässe Regal unter Bezugnahme auf die beigefügten Zeichnungen anhand von Ausführungsbeispielen detaillierter beschrieben. Es zeigen:
- Fig. 1: eine perspektivische Ansicht eines ersten Ausführungsbeispiels eines erfindungsgemässen Regals ohne Regalböden, das aus einem Ausführungsbeispiel eines erfindungsgemässen Struktursystems aufgebaut ist;
- Fig. 2: eine perspektivische Ansicht des Regals von Fig. 1 mit zugehörigen Regalböden;
- Fig. 3: eine Ansicht von oben auf das Regal von Fig. 1 ohne die Regalböden;
- Fig. 4: eine Ansicht von oben auf das Regal von Fig. 1 mit den Regalböden;
- Fig. 5: eine perspektivische Ansicht von oben auf Ausschnitte von Komponenten des Struktursystems von Fig. 1;
- Fig. 6: eine perspektivische Ansicht von unten an die Ausschnitte von Komponenten von Fig. 5;
- Fig. 7: eine perspektivische Ansicht eines zweiten Ausführungsbeispiels eines erfindungsgemässen Regals ohne Regalböden, das aus dem Struktursystem von Fig. 1 aufgebaut ist; und
- Fig. 8: eine perspektivische Ansicht des Regals von Fig. 7 mit zugehörigen Regalböden.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführunasbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

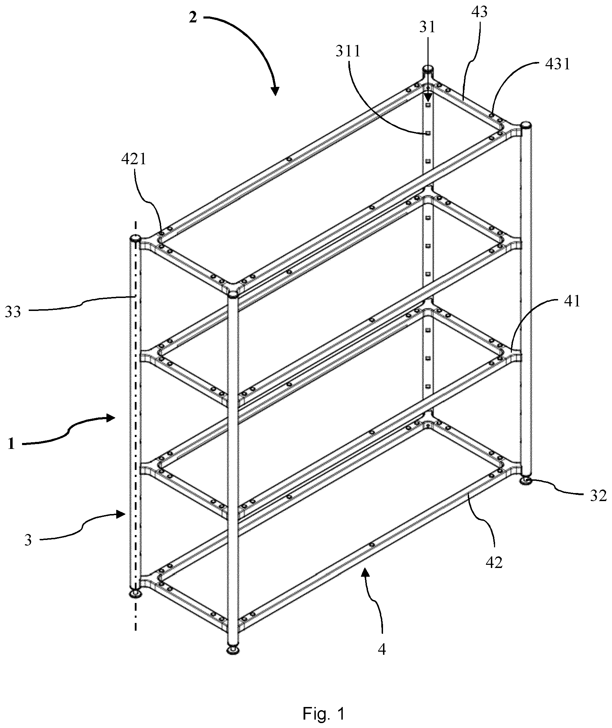

Fig. 1 zeigt ein erstes Ausführungsbeispiel eines erfindungsgemässen Regals 1 als einfache Ausführung einer Regalstruktur. Das Regal 1 ist aus Komponenten eines Ausführungsbeispiels eines erfindungsgemässen Struktursystems 2 aufgebaut. Das Regal 1 ist aus vier Vertikalstützen 3 gleicher Länge und vier Rahmen 4 gleicher Grösse des Struktursystems 2 aufgebaut.

Die Vertikalstützen 3 sind jeweils im Wesentlichen rundrohrförmig mit einer zentralen Längsachse 33 ausgebildet. Sie umfassen jeweils eine gerade, sich entlang der Längsachse 33 erstreckende Reihe von Lochungen 31 mit jeweils dreizehn regelmässig beabstandeten einzelnen Lochungen 311. Die Lochungen 311 sind jeweils als Öffnung mit quadratischem Querschnitt in einer Wandung der zugehörigen Vertikalstrebe 3 ausgebildet. Am unteren Ende sind die Vertikalstreben 3 jeweils mit einem Fuss 32 ausgestattet, auf welchen die Vertikalstreben 3 auf einem Boden aufstellbar sind.

Die Rahmen 4 sind jeweils aus zwei längeren Streben 42, zwei kürzeren Streben 43 und vier Montageecken 41 zusammengesetzt. Insbesondere sind jeweils eine kürzere Strebe 42 und eine längere Strebe 42 über einen der Montageecken 41 rechtwinklig miteinander verbunden. Dadurch bildet der Rahmen 4 eine im Wesentlichen rechteckige Form. Die Streben 42, 43 sind aus Vierkantrohren gebildet. An den Oberseiten der längeren Streben 42 sind fünf Aufnahmebohrungen 421 als Aufnahmen einer ersten Ausrichtstruktur ausgebildet. In ähnlicher Weise sind die kürzeren Streben 43 jeweils an ihren Oberseiten mit vier Aufnahmebohrungen 431 als Aufnahmen der ersten Ausrichtstruktur ausgestattet.

Die Montageecken 41 der Rahmen 4 sind wie weiter unten genauer beschrieben jeweils an einer der Vertikalstützen 3 befestigt, sodass Rahmen 4 und Vertikalstützen 3 zusammen ein stabiles freistehendes Gestell bilden.

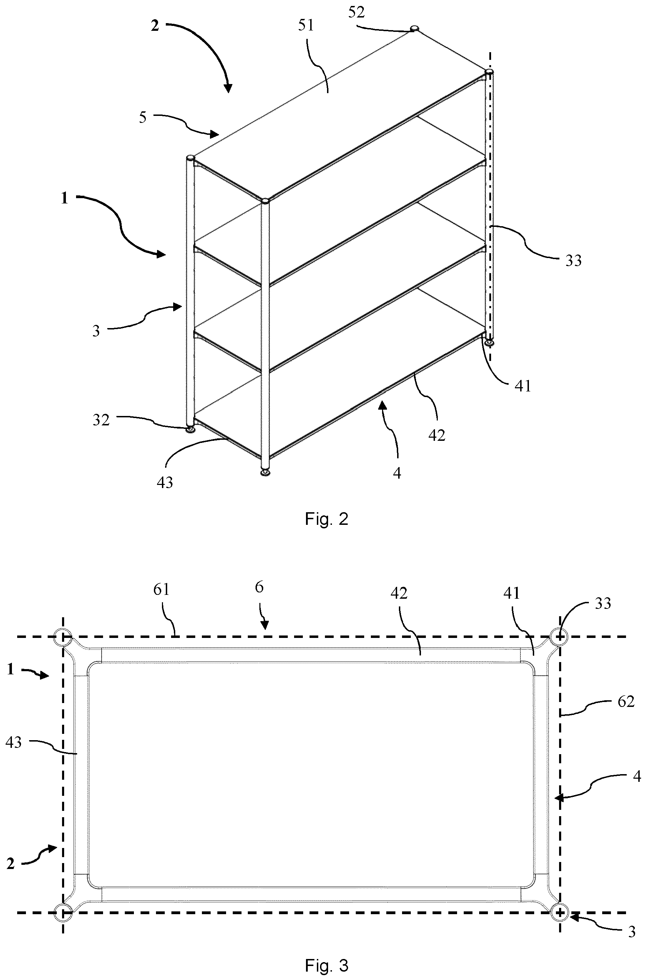

In Fig. 2 ist das Regal 1 mit vier eingelegten Regalböden 5 gezeigt. Dabei ist auf jeden der Rahmen 4 ein Regalboden 5 aufgelegt. Die Regalböden 5 sind jeweils quasi rechtwinklig ausgebildet, wobei sie so dimensioniert sind, dass sie die Rahmen 4 seitlich in der Länge nach etwas überragen. Sie weisen jeweils eine ebene Oberfläche 51 auf, auf die Gegenstände wie Waren oder ähnliches aufgestellt beziehungsweise abgelegt werden können. Die Regalböden 5 können aus einem beliebigen geeigneten Material wie beispielsweise aus Glas, Holz oder Metall hergestellt sein.

An ihren Unterseiten sind die Regalböden 5 mit Bolzen als Vorsprünge einer zweiten Ausrichtstruktur ausgestattet. Insbesondere weist jeder Regalboden 5 zehn Bolzen auf, die so dimensioniert und positioniert sind, dass sie in die Aufnahmebohrungen 421, 431 des zugehörigen Rahmens 4 eingeführt sind, wenn der Regalboden 5 bestimmungsgemäss auf dem Rahmen 4 aufliegt.

Fig. 3 zeigt das Regal 1 von oben her ohne Regalböden 5, sodass ein einzelner an den vier Vertikalstützen 3 montierter Rahmen 4 sichtbar ist. Wie weiter unten detaillierter beschrieben ist, sind die Montageecken 41 des Rahmens 4 jeweils in der Aufsicht quasi Y-förmig. Die Streben 42, 43 des Rahmens 4 sind zu den Vertikalstützen 3 hin etwas nach innen versetzt. Die Vertikalstützen 3 definieren vier Stützenebenen 6. Insbesondere definieren jeweils zwei benachbarte Vertikalstützen 3 so eine der Stützenebene 6, dass die beiden parallelen Längsachsen 33 der benachbarten Vertikalstützen 3 in der zugehörigen Stützenebene 6 liegen.

Dabei definieren die jeweils näher zueinander liegenden benachbarten Vertikalstützen 3 eine querliegende Stützenebene 62, die parallel zu den kürzeren Streben 43 und rechtwinklig zu den längeren Streben 42 angeordnet ist. In analoger Weise definieren die jeweils weiter voneinander weg liegenden benachbarten Vertikalstützen 3 eine längsliegende Stützenebene 61, die parallel zu den längeren Streben 42 und rechtwinklig zu den kürzeren Streben 43 angeordnet ist.

Durch das nach innen Versetzen der Streben 42, 43 mittels der Y-förmigen Montageecken 41 sind die Streben 42, 43 ausserhalb der Stützenebenen 6 angeordnet. Insbesondere verlaufen sie um zumindest einen halben Durchmesser einer der Vertikalstützen 3 versetzt parallel zu den Stützenebenen 6. Dadurch kann sich der Rahmen 4 durch in gleichem Abstand zueinander angeordnete weitere Vertikalstützen 3 hindurch erstrecken, was bei komplizierteren Aufbauten als dem Regal 1 neue beziehungsweise weitere Möglichkeiten bietet.

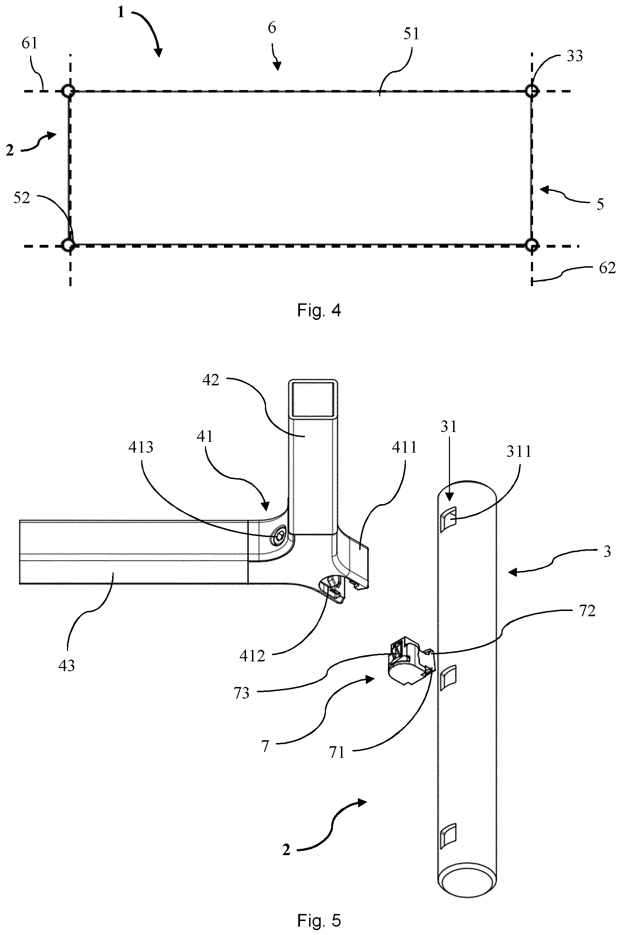

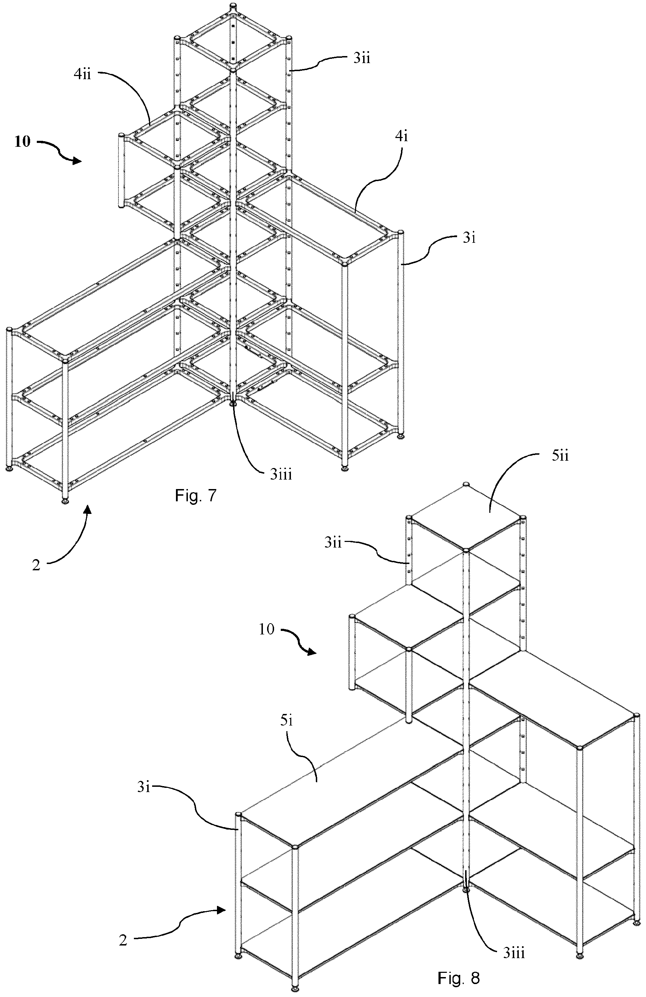

In Fig. 4 ist das Regal 1 mit Regalböden 5 von oben gezeigt. Dabei ist ersichtlich, dass die Kanten der Regalböden 5 in beziehungsweise an den Stützebenen 6 liegen. So endet jeder Regalboden 5 an den Stützebenen 6. Die rechteckigen Regalböden 5 weisen vier Ecken 52 auf, die jeweils viertelkreisförmig ausgeschnitten sind. Dabei sind die viertelkreisförmigen Ausschnitte der Ecken 52 den rundrohrförmigen Vertikalstützen 3 entsprechend dimensioniert und geformt. Insbesondere weisen diese Ausschnitte der Ecken 52 jeweils etwa den gleichen Radius auf wie die Vertikalstützen 3. Auf diese Weise können sich die Regalböden 5 in Längs- und Querrichtung bis etwa zur Mitte der Vertikalstützen 3 erstrecken. Wie beim Ausführungsbeispiel von Fig. 8 ersichtlich ist, ermöglicht dies, dass eine geschlossene Fläche gebildet werden kann, wenn mehrere Regalböden 5 auf einer Höhe aneinander angrenzend verbaut werden.

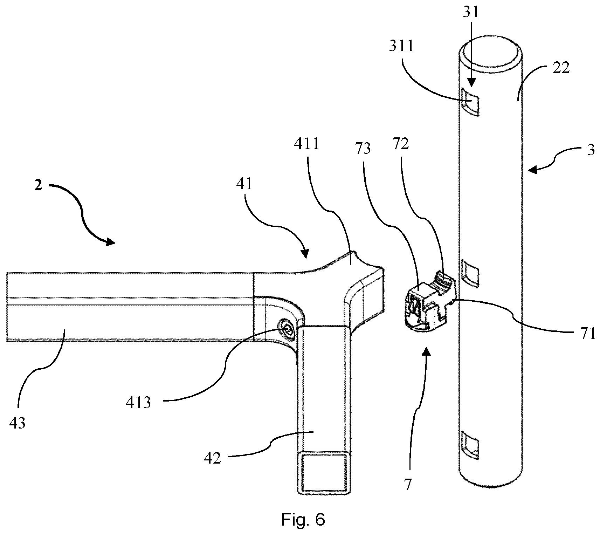

Fig. 5 und Fig. 6 zeigen beispielhaft eine Montageecke 41 der Rahmen 4 im Detail. Die Montageecke 41 umfasst einen rechtwinkligen Strebenabschnitt, an dem zwei der Streben 42, 43 fixiert sind. Vom Strebenabschnitt steht ein Verbindungsfortsatz 411 diagonal ab, sodass die Montageecke 41 quasi Y-förmig geformt ist. Am Verbindungsfortsatz 411 ist eine nach unten offene Aufnahme 412 ausgebildet.

Zur Befestigung der Montageecke 41 umfasst das Struktursystem 2 eine Mehrzahl von Verbindern 7. Die Verbinder 7 weisen jeweils einen Basiskörper 73 auf, von dem ein Einhängeabschnitt absteht. Der Einhängeabschnitt ist mit einem nach unten geöffneten Haken 71 und einer sich nach oben erstreckenden Nase 72 ausgestattet. Bei der Befestigung wird der Verbinder 7 an der Vertikalstütze 3 montiert, indem der Einhängeabschnitt in eine Lochung 311 auf geeigneter Höhe eingesetzt wird. Dabei umgreift der Haken 71 den unteren Rand der Lochung 311 und die Nase 72 erstreckt sich hinter den oberen Rand der Lochung 311. Die Nase 72 hintergreift also den oberen Rand der Lochung 311 vertikal nach oben.

Wenn der Verbinder 7 in die Lochung 311 eingesetzt ist, wird die Montageecke 41 beziehungsweise der Rahmen 4 auf den Verbinder 7 aufgelegt. Dabei wird der Basiskörper 73 in die Aufnahme 412 der Montageecke 41 eingeführt. Dadurch ist die Montageecke 41 und mit ihr der Rahmen 4 sicher am Verbinder 7 und somit der Vertikalstütze 3 befestigt. Falls dies gewünscht ist, kann die Montageecke 41 über eine Spannschraube 413 zusätzlich mit dem Verbinder 7 verspannt werden. Insbesondere kann es zweckmässig sein, die Montageecken 41 von zwei Rahmen 4 mit den zugehörigen Vertikalstützen 3 so zu verspannen. Dadurch kann eine sehr hohe Stabilität im Regal 1 erreicht werden.

Für das in den Fig. 1 bis Fig. 6 gezeigte Regal 1 wird ausschliesslich eine Variante der Vertikalstütze 3 mit einer Reihe von Lochungen 31 und von gleicher Länge wie oben erwähnt verwendet. Das Struktursystem 2 umfasst aber auch noch andere Varianten von Vertikalstützen 3, die bei Bedarf eingesetzt werden können. Insbesondere kann es beispielsweise erwünscht sein, Vertikalstützen 3 mit mehr als einer Reihe von Lochungen 31 und von unterschiedlicher Länge zu verbauen. Nachfolgend werden im Zusammenhang mit einem weiteren Ausführungsbeispiel des erfindungsgemässen Regals 10 die analogen Varianten von Vertikalstützen mit einer einzigen Reihe von Lochungen 31 als Vertikalstütze 3i, mit zwei Reihen von Lochungen 31 als Vertikalstütze 3ii und mit drei Reihen von Lochungen 31 als Vertikalstütze 3iii bezeichnet. Ausser der Anzahl Reihen von Lochungen 31, eventuell der Bestückung mit unterschiedlichen Verstromungen sowie eventuell ihrer Länge sind die Vertikalstützen 3i, 3ii und 3iii identisch.

In Fig. 7 ist das zweites Ausführungsbeispiel eines aus dem Struktursystem 2 aufgebauten erfindungsgemässen Regals 10 gezeigt. Insbesondere ist es aus sieben Vertikalstützen 3i mit einer Reihe von Lochungen, zwei Vertikalstützen 3ii mit zwei Reihen von Lochungen, einer Vertikalstütze 3iii mit drei Reihen von Lochungen, sechs grossen Rahmen 4i, acht kleinen Rahmen 4ii und achtundfünfzig Verbindern aufgebaut. Die Vertikalstützen 3i beinhalten zwei Vertikalstützen 3i einer Länge von einer Regaleinheitshöhe, zwei Vertikalstützen 3i einer Länge von zwei Regaleinheitshöhen, zwei Vertikalstützen 3i einer Länge von drei Regaleinheitshöhen und eine Vertikalstütze 3i einer Länge von fünf Regaleinheitshöhen. Die Vertikalstützen 3ii und die Vertikalstützen 3iii weisen alle jeweils eine Länge von fünf Regaleinheitshöhen auf. Die Regaleinheitshöhe kann beispielsweise etwa der Höhe eines aufgestellten Ordners entsprechen.

Die Rahmen 4i, 4ii sind jeweils über vier Verbinder an ihren Montageecken mit vier Vertikalstützen 3i, 3ii, 3iii verbunden. Dabei sind die Verbinder auf gewünschten Höhen in die passenden Lochungen eingehängt und die Rahmen 4i, 4ii sind auf die jeweils zugehörigen vier Verbinder aufgesteckt. Zumindest einige der Verbinder sind dazu ausgebildet, Strom im Innern der zugehörigen Vertikalstütze 3i, 3ii, 3iii abzugreifen und zum zugehörigen Rahmen 4i, 4ii zu leiten.

Fig. 8 zeigt das Regal 10 im Endausbau. Insbesondere umfasst es zusätzlich sechs grossen Glasböden 5i, acht kleinen Glasböden 5ii als Regalböden. Die Glasböden 51, 5ii sind den Rahmen 4i, 4ii entsprechend dimensioniert und auf diese aufgelegt beziehungsweise mit diesen verbunden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Struktursystem (2) zum modularen Aufbau von Regalen (2; 20) mit
einem Satz längsförmiger Vertikalstützen (3), die jeweils zumindest eine sich axial erstreckende Reihe von Lochungen (31) aufweisen,
einem Satz Rahmen (4), die jeweils vier Streben (42, 43) aufweisen, von denen jeweils zwei über eine Montageecke (41) miteinander verbunden sind, und
einem Satz Verbinder (7), die jeweils dazu ausgebildet sind, in eine Lochung (311) einer der Vertikalstützen (3) eingeführt und an einer der Montageecken (41) eines der Rahmen (4) befestigt zu werden,
wobei das Struktursystem (2) so ausgebildet ist, dass in einem zusammengebauten Zustand
zumindest ein Rahmen (4) des Satzes Rahmen (4) an seinen Montageecken (41) über jeweils einen Verbinder (7) des Satzes Verbinder (7) an vier Vertikalstützen (3) befestigt ist,
jeweils zwei benachbarte und über eine der Streben (42, 43) des zumindest einen Rahmens (4) miteinander verbundene Vertikalstützen (3) eine Stützenebene (6) definieren, und
die vier Streben (42, 43) des zumindest einen Rahmens (4) so ausserhalb der durch die vier mit ihm verbundenen Vertikalstützen (3) definierten Stützenebenen (6) liegen, dass der zumindest eine Rahmen zwischen zwei Vertikalstützen hindurchragend und mit anderen Vertikalstützen verbindbar ist.

2. Struktursystem (2) nach Anspruch 1, wobei die Montageecken (41) der Rahmen (4) jeweils
zwei Streben (42, 43) quasi rechtwinklig miteinander verbinden, sodass die Montageecke (41) einen Aussenwinkel von quasi 270° definiert, und
einen Verbindungsfortsatz (411) aufweisen, der sich quasi in Richtung einer Winkelhalbierenden des Aussenwinkels erstreckt.

3. Struktursystem (2) nach Anspruch 1 oder 2, wobei die Montageecken (41) der Rahmen (4) jeweils mit einer Aufnahme (412) ausgestattet sind, die zum vertikalen Einführen eines der Verbinder (7) ausgebildet sind.

4. Struktursystem (2) nach Anspruch 2 und 3, wobei die Aufnahme (412) am Verbindungsfortsatz (411) angeordnet ist.

5. Struktursystem (2) nach Anspruch 3 oder 4, wobei die Rahmen (4) dazu ausgebildet sind, an vier der Vertikalstützen (3) befestigt zu sein, indem jeweils an einer der Vertikalstützen (3) montierter Verbinder (7) in die Aufnahme (412) einer der Montageecken (41) eingeführt ist.

6. Struktursystem (2) nach einem der vorangehenden Ansprüche, wobei die Montageecken (41) von mindestens zwei der Rahmen (4) des Satzes von Rahmen (4) jeweils mit einem Spannmechanismus (413) ausgestattet sind, der dazu ausgebildet ist, den zugehörigen Rahmen (4) mit der Vertikalstütze zu verspannen, an der er über einen Verbinder (7) befestigt ist.

7. Struktursystem (2) nach einem der vorangehenden Ansprüche, wobei die Rahmen (4) des Satzes Rahmen (4) bis auf die Länge der Streben (42, 43) identisch ausgebildet sind.

8. Struktursystem (2) nach einem der vorangehenden Ansprüche, das einen Satz Böden (5) umfasst, die jeweils dazu ausgestaltet sind, auf einen der Rahmen (4) aufgelegt zu werden, wenn dieser an Vertikalstützen (3) montiert ist, wobei die Böden (5) vorzugsweise jeweils im Wesentlichen rechteckig sind.

9. Struktursystem (2) nach Anspruch 8, wobei die Böden (5) jeweils vier Ecken (52) umfassen, die jeweils dazu ausgebildet sind, eine der Vertikalstützen (3) teilweise zu umgreifen.

10. Struktursystem (2) nach Anspruch 8 oder 9, wobei
die Streben (42, 43) der Rahmen (4) mit einer ersten Ausrichtstruktur (421, 431) und die Böden (5) mit einer zweiten Ausrichtstruktur ausgestattet sind, und
die ersten Ausrichtstrukturen (421, 431) der Rahmen (4) und die zweiten Ausrichtstrukturen der Böden (5) dazu ausgebildet sind, dass die Böden (5) in einer vordefinierten Position auf die Rahmen (4) auflegbar sind,
wobei die erste Ausrichtstruktur (421, 431) vorzugsweise eine Aufnahme (421, 431) aufweist und die zweite Ausrichtstruktur einen zur Aufnahme (421, 431) passenden Vorsprung.

11. Struktursystem (2) nach einem der vorangehenden Ansprüche, wobei die Verbinder (7) jeweils einen Hakenabschnitt (71) aufweisen, der dazu ausgebildet ist in eine der Lochungen (311) einer der Vertikalstützen (3) eingehängt zu werden.

12. Struktursystem (2) nach einem der vorangehenden Ansprüche, wobei der Satz Vertikalstützen (3) zumindest eine Vertikalstütze (3) umfasst, die eine Mehrzahl von sich axial erstreckender Reihen von Lochungen (31) aufweist.

13. Struktursystem (2) nach einem der vorangehenden Ansprüche, wobei der Satz Vertikalstützen (3)
zumindest eine Vertikalstütze mit einer einzigen sich entlang der Vertikalstütze (3) erstreckenden Reihe von Lochungen (31) umfasst, und/oder
zumindest eine Vertikalstütze mit genau zwei sich entlang der Vertikalstütze (3) erstreckender Reihen von Lochungen (31) umfasst, und/oder
zumindest eine Vertikalstütze mit genau drei sich entlang der Vertikalstütze (3) erstreckender Reihen von Lochungen (31) umfasst, und/oder
zumindest eine Vertikalstütze mit genau vier sich entlang der Vertikalstütze (3) erstreckender Reihen von Lochungen (31) umfasst.

14. Struktursystem (2) nach einem der vorangehenden Ansprüche, wobei die Vertikalstützen (3) im Querschnitt jeweils einen kreisförmigen Aussenumfang aufweisen, wobei die Vertikalstützen (3) vorzugsweise jeweils einen rundrohrförmigen Rohrkörper umfassen.

15. Regal (2; 20), das aus einem Struktursystem (2) gemäss einem der vorangehenden Ansprüche aufgebaut ist.

## Claims

1. Structural system (2) for the modular setup of racks (2; 20), comprising
a set of elongate vertical supports (3), each having at least one axially extending row of holes (31),
a set of frames (4), each having four struts (42, 43), of which two are connected to one another via a mounting corner piece (41), and
a set of connectors (7), each designed to be introduced into a hole (311) of one of the vertical supports (3) and secured to one of the mounting corner pieces (41) of one of the frames (4),
wherein the structural system (2) is configured such that, in an assembled state,
at least one frame (4) of the set of frames (4) is secured to four vertical supports (3) by its mounting corner pieces (41) each via one connector (7) of the set of connectors (7),
each two neighboring vertical supports (3) that are connected to one another via one of the struts (42, 43) of the at least one frame (4) define a support plane (6), and
the four struts (42, 43) of the at least one frame (4) lie outside the support planes (6) defined by the four vertical supports (3) connected thereto such that the at least one frame can be projecting between two vertical supports and can be connected to other vertical supports.

2. Structural system (2) according to claim 1, wherein the mounting corner pieces (41) of the frames (4) each
interconnect two struts (42, 43) approximately at right angles, so that the mounting corner piece (41) defines an external angle of approximately 270° and
have a connection extension (411) which extends approximately in the direction of a bisecting line of the external angle.

3. Structural system (2) according to claim 1 or 2, wherein the mounting corner pieces (41) of the frames (4) are each equipped with a receptacle (412) designed for the vertical introduction of one of the connectors (7).

4. Structural system (2) according to claims 2 and 3, wherein the receptacle (412) is arranged on the connection extension (411).

5. Structural system (2) according to claim 3 or 4, wherein the frames (4) are configured to be secured to four of the vertical supports (3) by introducing each connector (7) mounted on one of the vertical supports (3) into the receptacle (412) of one of the mounting corner pieces (41).

6. Structural system (2) according to any of the preceding claims, wherein the mounting corner pieces (41) of at least two of the frames (4) of the set of frames (4) are each equipped with a clamping mechanism (413) configured to clamp the associated frame (4) to the vertical support to which it is secured via a connector (7).

7. Structural system (2) according to any of the preceding claims, wherein the frames (4) of the set of frames (4) are configured to be identical except for the length of the struts (42, 43).

8. Structural system (2) according to any of the preceding claims, comprising a set of shelves (5), each arranged to be placed on one of the frames (4) when said frame is mounted on vertical supports (3), wherein the shelves (5) are each preferably substantially rectangular.

9. Structural system (2) according to claim 8, wherein the shelves (5) each comprise four corner pieces (52) which are each configured to partially encompass one of the vertical supports (3).

10. Structural system (2) according to claim 8 or 9, wherein
the struts (42, 43) of the frames (4) are equipped with a first alignment structure (421, 431), and the shelves (5) are equipped with a second alignment structure, and
the first alignment structures (421, 431) of the frames (4) and the second alignment structures of the single shelves (5) are configured so that the shelves (5) can be placed on the frames (4) in a predefined position,
wherein preferably the first alignment structure (421, 431) has a receptacle (421, 431), and the second alignment structure has a projection matching the receptacle (421, 431).

11. Structural system (2) according to any of the preceding claims, wherein the connectors (7) each have a hook portion (71) which is configured to be hooked into one of the holes (311) of one of the vertical supports (3).

12. Structural system (2) according to any of the preceding claims, wherein the set of vertical supports (3) comprises at least one vertical support (3) having a plurality of axially extending rows of holes (31).

13. Structural system (2) according to any of the preceding claims, wherein the set of vertical supports (3) comprises
at least one vertical support with a single row of holes (31) extending along the vertical support (3), and/or
at least one vertical support with exactly two rows of holes (31) extending along the vertical support (3), and/or
at least one vertical support with exactly three rows of holes (31) extending along the vertical support (3), and/or
at least one vertical support with exactly four rows of holes (31) extending along the vertical support (3).

14. Structural system (2) according to any of the preceding claims, wherein the vertical supports (3) each have a circular outer circumference in cross-section, wherein the vertical supports (3) preferably each comprise a round tubular body.

15. Rack (2; 20) setup from a structural system (2) according to any of the preceding claims.

## Revendications

1. Système formant structure (2) pour la construction modulaire d'étagères (2 ; 20), comportant
un jeu de supports verticaux (3) longitudinaux qui présentent respectivement au moins une rangée de perforations (31) s'étendant axialement,
un jeu de cadres (4) qui présentent respectivement quatre entretoises (42, 43) dont respectivement deux sont reliées entre elles par l'intermédiaire d'un coin de montage (41), et
un jeu d'éléments de liaison (7) qui sont respectivement réalisés pour être insérés dans une perforation (311) de l'un des supports verticaux (3) et pour être fixés à l'un des coins de montage (41) de l'un des cadres (4),
dans lequel le système formant structure (2) est réalisé de sorte que, dans un état assemblé
au moins un cadre (4) du jeu de cadres (4) est fixé au niveau de ses coins de montage (41) à quatre supports verticaux (3) par l'intermédiaire de respectivement un élément de liaison (7) du jeu d'éléments de liaison (7),
respectivement deux supports verticaux (3) voisins et reliés l'un à l'autre par l'intermédiaire de l'une des entretoises (42, 43) de l'au moins un cadre (4) définissent un plan de support (6), et
les quatre entretoises (42, 43) de l'au moins un cadre (4) sont situées à l'extérieur des plans de support (6) définis par les quatre supports verticaux (3) qui sont reliés au cadre, de sorte que l'au moins un cadre fait saillie hors de deux supports verticaux et peut être relié à d'autres supports verticaux.

2. Système formant structure (2) selon la revendication 1, dans lequel les coins de montage (41) des cadres (4) relient quasiment à angle droit respectivement
deux entretoises (42, 43) entre elles, de sorte que le coin de montage (41) définit un angle extérieur de quasiment 270°, et
présentent un prolongement de liaison (411) qui s'étend quasiment en direction d'une bissectrice d'angle de l'angle extérieur.

3. Système formant structure (2) selon la revendication 1 ou 2, dans lequel les coins de montage (41) des cadres (4) sont respectivement pourvus d'un logement (412) qui est réalisé pour l'insertion verticale de l'un des éléments de liaison (7).

4. Système formant structure (2) selon la revendication 2 et 3, dans lequel le logement (412) est disposé sur le prolongement de liaison (411).

5. Système formant structure (2) selon la revendication 3 ou 4, dans lequel les cadres (4) sont réalisés pour être fixés sur quatre des supports verticaux (3) en insérant des éléments de liaison (7) montés respectivement sur un des supports verticaux (3) dans le logement (412) d'un des coins de montage (41).

6. Système formant structure (2) selon l'une des revendications précédentes, dans lequel les coins de montage (41) d'au moins deux des cadres (4) de l'ensemble de cadres (4) sont respectivement pourvus d'un mécanisme de serrage (413) qui est réalisé pour serrer le cadre (4) associé contre le support vertical auquel il est fixé par l'intermédiaire d'un élément de liaison (7).

7. Système formant structure (2) selon l'une des revendications précédentes, dans lequel les cadres (4) du jeu de cadres (4) sont réalisés de manière identique à l'exception de la longueur des entretoises (42, 43).

8. Système formant structure (2) selon l'une des revendications précédentes, comprenant un jeu de plateaux (5) qui sont respectivement conçus pour être posés sur l'un des cadres (4) lorsque celui-ci est monté sur des supports verticaux (3), dans lequel les plateaux (5) sont de préférence respectivement sensiblement rectangulaires.

9. Système formant structure (2) selon la revendication 8, dans lequel les planchers (5) comprennent respectivement quatre coins (52) qui sont respectivement réalisés pour entourer partiellement l'un des supports verticaux (3).

10. Système formant structure (2) selon la revendication 8 ou 9, dans lequel
les entretoises (42, 43) des cadres (4) sont pourvues d'une première structure d'alignement (421, 431) et les plateaux (5) sont pourvus d'une seconde structure d'alignement, et
les premières structures d'alignement (421, 431) des cadres (4) et les secondes structures d'alignement des plateaux (5) sont réalisées de telle sorte que les plateaux (5) peuvent être posés sur les cadres (4) dans une position prédéfinie,
dans lequel la première structure d'alignement (421, 431) présente de préférence un logement (421, 431) et la seconde structure d'alignement présente une saillie adaptée au logement (421, 431).

11. Système formant structure (2) selon l'une des revendications précédentes, dans lequel les éléments de liaison (7) présentent respectivement une section formant crochet (71) qui est réalisée pour être accrochée dans l'une des perforations (311) de l'un des supports verticaux (3).

12. Système formant structure (2) selon l'une des revendications précédentes, dans lequel le jeu de supports verticaux (3) comprend au moins un support vertical (3) qui présente une pluralité de rangées de perforations (31) s'étendant axialement.

13. Système formant structure (2) selon l'une des revendications précédentes, dans lequel le jeu de supports verticaux (3)
comprend au moins un support vertical comportant une seule rangée de perforations (31) s'étendant le long du support vertical (3), et/ou
comprend au moins un support vertical comportant exactement deux rangées de perforations (31) s'étendant le long du support vertical (3), et/ou
comprend au moins un support vertical comportant exactement trois rangées de perforations (31) s'étendant le long du support vertical (3), et/ou
comprend au moins un support vertical comportant exactement quatre rangées de perforations (31) s'étendant le long du support vertical (3).

14. Système formant structure (2) selon l'une des revendications précédentes, dans lequel les supports verticaux (3) présentent respectivement, dans la section transversale, une circonférence extérieure circulaire, dans lequel les supports verticaux (3) comprennent de préférence respectivement un corps tubulaire en forme de tube rond.

15. Étagère (2 ; 20) constituée d'un système formant structure (2) selon l'une des revendications précédentes.
